# FASCICULE DE BREVET EUROPEEN

(11) **EP 2 326 680 B1**
(45) Date de publication et mention de la délivrance du brevet: **13.05.2015**
(21) Numéro de dépôt: 09783410.5
(22) Date de dépôt: 25.09.2009
(51) Int. Cl.: C08G 69/02, C08G 69/04, C08G 69/26, C08G 69/08, C08K 3/00, C08K 7/02, C08K 7/14, C08G 69/28, C08G 69/30

(54) **COMPOSITION POLYAMIDE RENFORCEE**
VERSTÄRKTE POLYAMIDZUSAMMENSETZUNG
REINFORCED POLYAMIDE COMPOSITION

(30) Priorité: 26.09.2008 FR 0805300
(43) Date de publication de la demande: 01.06.2011
(73) Titulaire: Rhodia Opérations, 93306 Aubervilliers (FR)
(72) Inventeur: TOURAUD, Franck, F-38780 Eyzin Pinet (FR); JEOL, Stéphane, 69006 Lyon (FR)
(74) Mandataire: Benvenuti, Federica
(86) Numéro de dépôt international: PCT/EP2009/062433
(87) Numéro de publication internationale: WO 2010/034803

(56) Documents cités:
- DE-A1- 4 132 080
- US-A- 2 238 640
- US-A- 2 374 145
- US-A1- 2004 116 579
- DATABASE WPI Week 200345 Thomson Scientific, London, GB; AN 2003-472131 XP002518207 -& JP 2002 284872 A (TORAY IND INC) 3 octobre 2002 (2002-10-03)

## Description

La présente invention concerne une composition polyamide comprenant des charges de renfort et un polyamide modifié obtenu par polymérisation à partir d'un composé hydroxyaromatique monofonctionnel acide ou amine notamment, en présence de composés diacide, diamine et/ou aminoacide ou lactame. La présente invention concerne également un procédé de préparation de cette composition ainsi que des articles obtenus à partir cette dernière. Les polymères thermoplastiques sont des matières premières susceptibles d'être transformées par moulage, moulage par injection, injection soufflage, extrusion, extrusion/soufflage ou filage, notamment en de multiples articles tels que des pièces, par exemple pour carrosserie, soufflées, extrudées, ou moulées, des fils, des fibres ou des films...

Il existe au moins deux contraintes majeures dans toutes ces filières de transformation de polymère thermoplastique.

La première de ces contraintes est que les polymères thermoplastiques mis en oeuvre doivent être caractérisés, à l'état fondu, par une viscosité ou un comportement rhéologique compatible avec les procédés de mise en forme susvisés. Ces polymères thermoplastiques doivent être suffisamment fluides lorsqu'ils sont en fusion, pour pouvoir être acheminés et manipulés aisément et rapidement dans certaines machines de mise en forme.

L'autre contrainte qui pèse sur les compositions polymères thermoplastiques est liée aux qualités mécaniques qu'ils doivent présenter après avoir été fondus, mis en forme et durcis par refroidissement. Ces qualités mécaniques sont notamment les propriétés thermomécaniques.

Parmi les polymères thermoplastiques, les polyamides sont des polymères présentant un intérêt industriel et commercial important, en particulier les polyamides aliphatiques. Ces polyamides aliphatiques sont facilement synthétisables et transformables en voie fondue. Toutefois, on cherche toujours à améliorer leurs propriétés mécaniques, en particulier thermomécaniques.

Le document JP2002284872 décrit un polyamide modifié dans le but d'augmenter la masse moléculaire. Le document DE4132080 porte sur un procédé pour obtenir des polyamides-polycarbonates. Le document US2238640 concerne la réticulation de polyamides pour obtenir des polyamides thermodurcissables. Quant à US2374145 il porte sur des polyamides stabilisés vis-à-vis de la lumières et des intempéries. Enfin, US2004116579 porte sur des compositions polyamides comprenant au moins une charge de renfort.

La présente invention a pour premier objet une composition comprenant au moins des charges de renfort et un polyamide modifié par un composé contenant au moins un groupement hydroxyle aromatique chimiquement lié à la chaîne du polyamide, le polyamide étant obtenu par polymérisation d'au moins les monomères suivants :
i) au moins un composé hydroxyaromatique A) choisi parmi : A2) un composé hydroxyaromatique monofonctionnel, dont la fonction peut réagir avec une fonction amine, et A4) une monoamine hydroxyaromatique, et
ii) au moins des monomères de polyamide choisis dans le groupe constitué par:
   - un mélange d'un diacide B) aliphatique, cycloaliphatique, arylaliphatique, ou aromatique et d'une diamine C), et/ou
   - un lactame ou un aminoacide D).

Préférentiellement, le polyamide est obtenu par polymérisation d'au moins les monomères suivants :
A) au moins un composé hydroxyaromatique choisi parmi :
   - A2) un composé hydroxyaromatique monofonctionnel, dont la fonction peut réagir avec une fonction amine, et
   - A4) une monoamine hydroxyaromatique,
B) un diacide aliphatique, cycloaliphatique, arylaliphatique, ou aromatique,
C) une diamine, de préférence aliphatique,
D) éventuellement un lactame ou un aminoacide, de préférence aliphatique.

Le polyamide modifié de l'invention est facilement synthétisable et transformable en voie fondue, et il présente de meilleures propriétés mécaniques, en particulier thermomécaniques, qu'un polyamide non modifié.

Par « groupement hydroxyle aromatique », on entend une fonction hydroxyle rattachée à un atome de carbone faisant partie d'un cycle aromatique.

Par « composé hydroxyaromatique », on entend un composé comportant au moins un groupement hydroxyle aromatique.

Par « chimiquement lié » on entend lié par une liaison covalente.

Le composé hydroxyaromatique de l'invention est un composé organique comprenant au moins un groupement hydroxyle aromatique.

Les fonctions pouvant réagir avec une fonction amine sont notamment les fonctions acides, la fonction cétone et la fonction aldéhyde.

Par composé ayant une « fonction acide » on entend un composé organique comprenant une fonction acide carboxylique ou dérivée, telles que chlorure d'acide, anhydride, d'acide, amide, ester.

Les groupements hydroxyle aromatique de l'invention ne sont pas considérés comme des fonctions réagissant avec les fonctions acide.

Avantageusement le groupement hydroxyle du monomère A) n'est pas encombré, c'est-à-dire par exemple que les atomes de carbone situés en α de la fonction hydroxyle ne sont de préférence pas substitués par des substituants encombrants, tels que des alkyles ramifiés.

Le composé A2) est préférentiellement un composé de formule (III) suivante :

(HO)ₓ-R"-COOH (III)

dans laquelle R" est un radical hydrocarboné aromatique ou arylaliphatique multivalent (au moins divalent) et x est compris entre 1 et 10.

Par « radical arylaliphatique » on entend un radical selon lequel au moins la fonction acide du composé de formule (III) n'est pas rattachée à ce radical par un atome de carbone faisant partie faisant partie d'un cycle aromatique.

Avantageusement R" comporte entre 6 et 18 atomes de carbone.

Le composé A2) peut par exemple être l'acide 4-hydroxyphénylacétique ou l'acide gallique. Il s'agit de préférence de l'acide 4-hydroxyphénylacétique.

Dans le cadre de l'invention, des mélanges de différents composés A2) peuvent être mis en oeuvre.

Le composé A4) est préférentiellement un composé de formule (IV) suivante :

(HO)ₓ-R"-NH₂ (IV)

avec R" et x tels que décrits ci-dessus.

A titre d'exemple de monoamine hydroxyaromatique A4), on peut citer la tyramine, l'amino-3 phénol, l'amino-3 méthyl-4 phénol, et l'(amino-2-éthyl)-4-phénol..

Lorsque le monomère A) est uniquement du type A4) avantageusement au moins 3 atomes de carbone séparent l'atome d'azote de la fonction amine de l'atome d'oxygène de la fonction hydroxyle lorsque les deux fonctions amine et hydroxyle sont rattachées à un atome de carbone faisant partie d'un cycle aromatique, et au moins 5 atomes de carbone séparent l'atome d'azote de la fonction amine de l'atome d'oxygène de la fonction hydroxyle dans les autres cas.

Avantageusement le composé B) est de formule (V) suivante :

HOOC-R'-COOH (V)

dans laquelle R' est un radical hydrocarboné divalent aliphatique, cycloaliphatique, arylaliphatique ou aromatique.

De préférence le radical R' comporte entre 2 et 18 atomes de carbone.

Par diacide arylaliphatique on entend un diacide dont au moins une des fonctions acide n'est pas rattachée à un atome de carbone faisant partie d'un cycle aromatique.

Selon un mode de réalisation particulier du procédé de l'invention, le composé B) est un diacide aliphatique. L'acide aliphatique peut par exemple être choisi parmi l'acide oxalique, maléique, succinique, pimélique, azélaïque. Il peut également comprendre des insaturations, c'est le cas par exemple de l'acide maléique ou fumarique.

Les acides dicarboxyliques peuvent également être choisis parmi l'acide glutarique, l'acide adipique, l'acide subérique, l'acide sébacique, l'acide dodécanedioïque , l'acide 1,2-ou 1,3-cyclohexane dicarboxylique ; l'acide 1,2-ou 1,3-phénylène diacétique ; l'acide 1,2-ou 1,3-cyclohexane diacétique ; l'acide isophthalique ; l'acide téréphthalique ; l'acide 4,4'-benzophénone dicarboxylique; l'acide 2,5-naphthalène dicarboxylique; et l'acide p-t-butyl isophthalique. L'acide dicarboxylique préféré est l'acide adipique.

Dans le cadre de l'invention, des mélanges de différents composés B) peuvent être mis en oeuvre, notamment des mélanges de diacides aliphatiques et de diacides aromatiques.

Le polyamide modifié de l'invention est également obtenu à partir d'un monomère C) diamine, de préférence aliphatique.

Les diamines utiles dans la présente invention ont avantageusement la formule H₂N-R-NH₂ (VI) dans laquelle R est un radical hydrocarboné divalent, en particulier un diradical aliphatique, aromatique, ou arylaliphatique ou un dérivé substitué de ces diradicaux. Le radical R comporte avantageusement entre 2 et 18 atomes de carbone.

Par diamine arylaliphatique on entend une diamine dont au moins une des fonctions amine n'est pas rattachée à un atome de carbone faisant partie d'un cycle aromatique.

Des diamines aliphatiques convenables comprennent des diamines aliphatiques à chaîne droite, telles que le 1,10-diaminodécane, des diamines aliphatiques à chaîne ramifiée, telles que le 2-méthyl-1,6-diaminohexane, et des diamines cycloaliphatiques, telles que les di (aminométhyl) cyclohexanediamines.

La chaîne aliphatique peut contenir des hétéro-atomes tels que le soufre ou l'oxygène, tel que représenté par la 3,3'-éthylènedioxybis(propylamine), et elle peut aussi porter des substituants, tels que des atomes d'halogène, qui ne réagissent pas dans les conditions de polymérisation.

Des diamines aromatiques convenables dans la présente invention comprennent des diamines dans lesquelles R dans la formule générale est le groupe phénylène, un groupe aromatique condensé, tel que le groupe naphtylène, ou deux (ou davantage) noyaux aromatiques liés, tel que représenté par le bisphénylène, le bis-phénylèneméthane, le bisphénylènepropane, la bisphénylènesulfone, l'éther de bisphénylène et analogues. De plus, n'importe lequel des groupes aromatiques peut porter un ou plusieurs substituants sur le noyau, tels que des groupes alkyles inférieurs ou des atomes d'halogène, qui ne réagissent pas dans les conditions de polymérisation. La diamine contient de préférence 2 à 18 atomes de carbone, de préférence encore 4 à 12 atomes de carbone. Des diamines particulièrement convenables comprennent-des diamines de la série homologue H₂N(CH₂)mNH₂ dans laquelle m est un nombre entier de 2 à 12, de préférence de 4 à 8, et des diamines de formule générale H₂N(CH₂)ₚY(CH₂)qNH₂ dans laquelle Y est un radical phénylène et p et q sont indépendamment 1, 2 ou 3. On peut citer à titre d'exemple de diamines aromatiques la méta-xylylène diamine ou la paraxylylène diamine.

Les diamines peuvent par exemple être choisies parmi l'hexaméthylène diamine ; la butane diamine ; la 2-méthyl pentaméthylène diamine ; la 2-méthyl hexaméthylène diamine ; la 3-méthyl hexa-méthylène diamine ; la 2,5-diméthyl hexaméthylène diamine ; la 2,2-diméthylpentaméthylène diamine ; la nonane diamine ; la 5-méthylnonane diamine ; la dodécaméthylène diamine ; la 2,2,4-et 2,4,4-triméthyl hexaméthylène diamine ; la 2,2,7,7-tétraméthyl octaméthylène diamine ; l'isophorone diamine ; le diaminodicyclohexyl méthane et les diamines aliphatiques en C2 -C16 qui peuvent être substituées par un ou plusieurs groupements alkyles. La diamine préférée est l'hexaméthylène diamine.

Des mélanges de diamines peuvent être aussi utilisés dans la présente invention.

Le polyamide modifié de l'invention peut être obtenu à partir notamment d'un monomère lactame ou un aminoacide D), de préférence aliphatique. Avantageusement le lactame ou aminoacide D) comporte entre 2 et 18 atomes de carbone. A titre d'exemple de tels lactames ou aminoacides, on peut citer le caprolactame, l'acide 6-aminohexanoïque, l'acide 5-aminopentanoïque, l'acide 7-aminoheptanoïque, l'acide 11-aminoundécanoïque, le dodécanolactame.

Dans le cadre de l'invention, des mélanges de différents composés D) peuvent être mis en oeuvre.

Lorsque le monomère A) est uniquement du type A2), avantageusement au moins une fonction amine de la diamine C) est primaire. L'invention propose un procédé de préparation du polyamide modifié décrit ci-dessus par polymérisation à l'état fondu des monomères A) en présence des monomères B) et C), et/ou D) décrits ci-dessus, ces monomères étant présents en totalité ou en partie. Préférentiellement, la polymérisation a l'état fondu est réalisée en présence d'au moins les monomères A), B), C), et éventuellement D) décrits ci-dessus, ces monomères étant présents en totalité ou en partie.

Par l'expression « polymérisation à l'état fondu » on entend que la polymérisation est réalisée à l'état liquide, et que le milieu de polymérisation ne contient pas de solvant autre que de l'eau, éventuellement. Le milieu de polymérisation peut par exemple être une solution aqueuse comprenant les monomères, ou un liquide comprenant les monomères.

Avantageusement le milieu de polymérisation comprend de l'eau comme solvant. Cela facilite l'agitation du milieu, et donc son homogénéité.

Le milieu de polymérisation peut également comprendre des additifs tels que des limiteurs de chaîne.

Le polyamide modifié de l'invention est généralement obtenu par polycondensation entre les monomères décrits précédemment, pour former des chaînes polyamides, avec formation du produit d'élimination, en particulier l'eau, dont une partie peut se vaporiser.

Le polyamide modifié de l'invention est généralement obtenu, par chauffage à température et pression élevées, par exemple d'une solution aqueuse comprenant les monomères, ou d'un liquide comprenant les monomères, pour évaporer le produit d'élimination, en particulier l'eau, présente initialement dans le milieu de polymérisation et/ou formée lors de la polycondensation, tout en évitant toute formation de phase solide afin d'éviter une prise en masse.

La réaction de polycondensation est généralement effectuée à une pression d'environ 0,5-2,5 MPa à une température d'environ 100-320°C. La polycondensation est généralement poursuivie en phase fondue à pression atmosphérique ou réduite de manière à atteindre le degré d'avancement souhaité.

Le produit de polycondensation est un polymère ou prépolymère fondu. Il peut comprendre une phase vapeur essentiellement constituée de vapeur du produit d'élimination, en particulier d'eau, susceptible d'avoir été formée et/ou vaporisée.

Ce produit peut être soumis à des étapes de séparation de phase vapeur et de finition afin d'atteindre le degré de polycondensation désiré. La séparation de la phase vapeur peut par exemple être réalisée dans un dispositif de type cyclone. De tels dispositifs sont connus.

La finition consiste à maintenir le produit de polycondensation à l'état fondu, sous une pression voisine de la pression atmosphérique ou sous pression réduite, pendant un temps suffisant pour atteindre le degré d'avancement désiré. Une telle opération est connue de l'homme du métier. La température de l'étape de finition est avantageusement supérieure ou égale à 100°C et dans tous les cas supérieure à la température de solidification du polymère. Le temps de séjour dans le dispositif de finition est de préférence supérieur ou égal à 5 minutes.

Le produit de polycondensation peut également subir une étape de post-condensation en phase solide. Cette étape est connue de l'homme du métier et permet d'augmenter le degré de polycondensation à une valeur souhaitée.

Le procédé de l'invention est similaire dans ses conditions au procédé classique de préparation de polyamide du type de ceux obtenus à partir d'acides dicarboxyliques et de diamines, en particulier du procédé de fabrication de polyamide 66 à partir d'acide adipique et d'hexaméthylène diamine. Ce procédé de fabrication de polyamide 66 est connu de l'homme du métier. Le procédé de fabrication de polyamide du type de ceux obtenus à partir d'acides dicarboxyliques et de diamines utilise généralement comme matière première, un sel obtenu par un mélange en quantité stoechiométrique en général dans un solvant comme l'eau, d'un diacide avec une diamine. Ainsi, dans la fabrication du poly(hexaméthylène adipamide), l'acide adipique est mélangé avec de l'hexaméthylène diamine généralement dans de l'eau pour obtenir de l'adipate d'hexaméthylène diammonium plus connu sous le nom de sel Nylon ou "Sel N".

Ainsi, lorsque le procédé de l'invention met en oeuvre un diacide B) et une diamine C), ces composés peuvent être introduits, au moins en partie, sous la forme d'un sel de composé B) et de composé C). En particulier lorsque le composé B) est l'acide adipique et le composé C) l'hexaméthylène diamine, ces composés peuvent être introduits au moins en partie sous forme de sel N. Ceci permet d'avoir un équilibre stoechiométrique.

Le polyamide modifié obtenu à la fin de l'étape de finition peut être refroidi et mis sous forme de granulés.

Le polyamide modifié obtenu par le procédé de l'invention sous forme fondue peut être directement mis en forme ou être extrudé et granulé, pour une mise en forme ultérieure après fusion.

Le polyamide modifié de l'invention présente l'avantage d'être aisément transformable en voie fondue, comme les polyamides aliphatiques par exemple, ce qui facilite sa mise en forme. De plus il présente des propriétés thermomécaniques améliorées, par exemple ils présentent une température de transition vitreuse plus élevée que les polyamides aliphatiques, notamment de même masse molaire. Enfin ils montrent de meilleures propriétés de reprise en eau par rapport aux polyamides aliphatiques.

Le polyamide de l'invention peut être sous forme d'une composition à base du polyamide modifié comme matrice et comprenant des additifs, tels que des charges de renfort, des ignifugeants, des stabilisants aux UV, à la chaleur, des matifiants tels que le dioxyde de titane, des pigments, des colorants etc..

La composition polyamide comprenant des charges de renfort est préparée d'abord par polymérisation à l'état fondu des monomères ; et ensuite mélange du polyamide modifié formé avec des charges de renfort.

La composition peut comprendre des charges de renfort ou de remplissage, notamment fibreuses et/ou non fibreuses.

Comme charge fibreuses on peut citer les fibres de verre, les fibres de carbone, les fibres naturelles, les fibres d'aramides, et les nanotubes, notamment de carbone. On peut citer comme fibres naturelles le chanvre et le lin. Parmi les charges non fibreuses on peut notamment citer toutes les charges particulaires, lamellaires et/ou les nanocharges exfoliables ou non exfoliables comme l'alumine, le noir de carbone, les argiles alumino-silicates, les montmorillonites, le phosphate de zirconium, le kaolin, le carbonate de calcium, les diatomées, le graphite, le mica, la silice, le dioxyde de titane, les zéolites, le talc, la wollastonite, les charges polymériques telles que, par exemple, des particules de diméthacrylates.

On préfère particulièrement les charges inorganiques.

Il est parfaitement possible selon l'invention que la composition comprenne plusieurs types de charges de renfort.

De façon préférentielle, la charge la plus utilisée peut être les fibres de verres, du type dit coupé (chopped), notamment ayant un diamètre compris entre 7 et 14 µm. Ces fibres de verre peuvent présenter une longueur moyenne comprise entre 200 et 400 µm. Ces charges peuvent présenter un ensimage surfacique qui assure l'adhésion mécanique entre les fibres et la matrice polyamide.

La concentration pondérale des charges de renfort ou de remplissage est comprise avantageusement entre 1 % et 60 % en poids par rapport au poids total de la composition, de préférence entre 15 et 50 %.

On peut notamment ajouter à la composition polyamide des agents modifiants la résistance aux chocs. Ce sont généralement des polymères d'élastomères qui peuvent être utilisés à cet effet. Les agents modificateurs de la résilience sont généralement définis comme ayant un module de traction ASTM D-638 inférieur à environ 500 MPa. Des exemples d'élastomères convenables sont les éthylène-ester acrylique-anhydride maléique, les éthylène-propylène-anhydride maléique, les EPDM (éthylène-propylène-diène monomère) avec éventuellement un anhydride maléique greffé. La concentration pondérale en élastomère est avantageusement comprise entre 0,1 et 30 % par rapport au poids total de la composition.

On préfère notamment les agents modificateurs de chocs comprenant des groupements fonctionnels réactifs avec le polyamide. On peut par exemple citer les terpolymères d'éthylène, ester acrylique et glycidyl méthacrylate, les copolymères d'éthylène et de butyl ester acrylate, les copolymères d'éthylène, n-butyl acrylate et glycidyl méthacrylate, les copolymères d'éthylène et d'anhydride maléique, les copolymères styrène-maléimides greffés avec de l'anhydride maléique, les copolymères styrène-éthylène-butylène-styrène modifié avec de l'anhydride maléique, les copolymères styrène-acrylonitrile greffés anhydrides maléiques, les copolymères acrylonitrile butadiène styrène greffés anhydrides maléiques, et leurs versions hydrogénées. La proportion en poids de ces agents dans la composition totale est notamment comprise entre 0,1 et 40 %.

Ces charges et additifs peuvent être ajoutés au polyamide modifié par des moyens usuels adaptés à chaque charge ou additif, tel que par exemple lors de la polymérisation ou en mélange en fondu.

Les matériaux de l'invention sont généralement obtenus par mélange des différents constituants a chaud, par exemple dans une extrudeuse mono ou bivis, à une température suffisante pour maintenir la résine polyamide en milieu fondu ; ou a froid, dans un mélangeur mécanique notamment. La composition est préférentiellement réalisée par mélange des matériaux en phase fondue. Généralement, le mélange obtenu est extrudé sous forme de joncs qui sont coupés en morceaux pour former des granulés. Les composés peuvent être ajoutés à n'importe quel moment du processus de fabrication du matériau plastique, notamment par mélange a chaud ou a froid avec la matrice plastique. L'addition des composés et des additifs, peut être réalisée par ajout de ces composés dans la matrice plastique fondue sous forme pure ou sous forme de mélange concentré dans une matrice telle que par exemple une matrice plastique.

Le polyamide modifié de l'invention peut être utilisé comme matière première dans le domaine des plastiques techniques, par exemple pour la réalisation d'articles moulés par injection ou par injection/soufflage, extrudés par extrusion classique ou par extrusion soufflage, ou poudres.

La présente invention concerne ainsi aussi un procédé de moulage par injection dans lequel on introduit dans un dispositif de moulage par injection une composition selon l'invention, notamment sous forme de granulés, et l'on procède au moulage.

Le terme et/ou inclut les significations et, ou, ainsi que toutes les autres combinaisons possibles des éléments connectés à ce terme.

D'autres détails ou avantages de l'invention apparaîtront plus clairement à la vue des exemples donnés ci-dessous.

### EXEMPLES

### Caractérisations

Teneurs en groupements terminaux acide (GTC) et amine (GTA) : dosées par potentiométrie, exprimées en méq/kg.

Masse molaire moyenne en nombre déterminée par la formule Mn=2.10⁶/(GTA+GTC) et exprimées en g/mol.

Température de fusion (T_{f}) et enthalpie associée (ΔHf), température de cristallisation au refroidissement (T_{c}) : déterminées par calorimétrie différentielle à balayage (DSC « Differential Scanning Calorimetry »), à l'aide d'un appareil Perkin Elmer Pyris 1, à une vitesse de 10°C/min.

Température de transition vitreuse (Tg) déterminées sur le même appareil à une vitesse de 40 °C/min.

### Exemple 1 comparatif 1 : PA 66 non modifié

Dans un réacteur de polymérisation sont introduits 92,6 kg (353 mol) de sel N (sel 1:1 d'hexaméthylène diamine et d'acide adipique), 84 kg d'eau déminéralisée et 6,4 g d'agent antimousse Silcolapse 5020®. Le polyamide 66 est fabriqué selon un procédé standard de polymérisation de type polyamide 66, avec 30 minutes de finition à pression atmosphérique. Le polymère obtenu est coulé sous forme de jonc, refroidi et mis sous forme de granulé par coupe des joncs.

Le polymère obtenu présente les caractéristiques suivantes : GTC = 70,2 meq/kg, GTA = 51,5 meq/kg, Mn = 16430 g/mol.

Le polyamide 66 est semi-cristallin et a les caractéristiques thermiques suivantes : Tg= 70,6 °C, Tc= 230,9 °C, Tf= 263,7 °C, ΔHf = 68,4 J/g.

### Exemple 1 comparatif 2 : PA 66 non modifié basse masse molaire

Dans un réacteur de polymérisation sont introduits 90,75 kg (345,9 mol) de sel N (sel 1:1 d'hexaméthylène diamine et d'acide adipique), 939 g d'acide acétique 100% (15,63 mol), 3,05 kg d'une solution aqueuse d'hexaméthylène diamine à 32,6 % en poids (8,56 mol), 83,5 kg d'eau déminéralisée et 6,4 g d'agent antimousse Silcolapse 5020®. Le polyamide 66 est fabriqué selon un procédé standard de polymérisation de type polyamide 66, avec 30 minutes de finition à pression atmosphérique. Le polymère obtenu est coulé sous forme de jonc, refroidi et mis sous forme de granulé par coupe des joncs.

Le polymère obtenu présente les caractéristiques suivantes : GTC = 59,9 meq/kg, GTA = 65,7 meq/kg et une teneur en acide acétique GTAcétique=193 meq/kg (calculée à partir des quantités initiales de réactifs introduits dans le réacteur de synthèse) soit Mn = =2.10⁶/(GTA+GTC+GTAcétique)= 6280 g/mol.

Le polyamide 66 de basse masse molaire est semi-cristallin et a les caractéristiques thermiques suivantes : Tg= 61,3°C, Tc= 232,3 °C, Tf= 263,1 °C, ΔHf = 74,5 J/g.

### Exemple 1 comparatif 3 : PA 66 non modifié basse masse molaire

Dans un réacteur de polymérisation sont introduits 125,1 g (0,48 mol) de sel N (sel 1:1 d'hexaméthylène diamine et d'acide adipique), 17,41 g d'acide adipique 100% (0,12 mol), 22,45 g d'une solution aqueuse d'hexaméthylène diamine à 32,25 % en poids (0,06 mol), 120,6 g d'eau déminéralisée et 2 g d'un agent antimousse. Le polyamide 66 est fabriqué selon un procédé standard de polymérisation de type polyamide 66, avec 30 minutes de finition sous vide inférieur à 50 mbar. Le polymère obtenu est coulé sur plateau.

Le polymère obtenu présente les caractéristiques suivantes : GTC = 821 meq/kg, GTA = 0 meq/kg soit Mn = 2440 g/mol.

Le polyamide 66 de basse masse molaire est semi-cristallin et a les caractéristiques thermiques suivantes : Tg= 52,4°C, Tc= 234,9 °C, Tf= 260,6 °C, ΔHf = 76,7 J/g.

### Exemple 2 : préparation d'un polyamide PA 66 fonctionnalisé phénol par un monoamino-phénol

Dans un réacteur de polymérisation sont introduits 133,74 g de sel N (0,51 mol), 7,85 g de tyramine à 99 % (0,057 mol), 4,14 g d'acide adipique (0,028 mol) et 132,52 g d'eau déminéralisée et 2 g d'un agent antimousse. Le polyamide est fabriqué selon un procédé standard de polymérisation de type polyamide 66 avec 30 minutes de finition à pression atmosphérique. Le polymère obtenu est coulé sur un plateau.

Le polymère obtenu présente les caractéristiques suivantes :
GTC = 92,7 meq/kg, GTA = 38,5 meq/kg. On calcule la quantité théorique de fonctions phénol en extrémité de chaîne GTP d'après les quantités initiales introduites dans le réacteur. GTP = 434 meq/kg. Mn = 2.10⁶/(GTA + GTC + GTP) = 3540 g/mol.
Le polyamide PA 66 fonctionnalisé phénol par la tyramine est semi-cristallin et a les caractéristiques thermiques suivantes : Tg=72,4°C, Tc= 233,9 °C, Tf= 256,7 °C, ΔHf = 84,8 J/g.

### Exemple 3 : préparation d'un polyamide PA 66 fonctionnalisé phénol par un monoacide-phénol

Dans un réacteur de polymérisation sont introduits 135,2 g de sel N (0,52 mol), 9,41 g d'acide 4-hydroxyphénylacétique à 98 % (0,06 mol), 10,87 g d'une aqueuse solution d'hexaméthylène diamine à 32,4% (0,03 mol) et 127,2 g d'eau déminéralisée et 2 g d'un agent antimousse. Le polyamide est fabriqué selon un procédé standard de polymérisation de type polyamide 66 avec 30 minutes de finition à pression atmosphérique. Le polymère obtenu est coulé sur un plateau.

Le polymère obtenu présente les caractéristiques suivantes :
GTC = 103,3 meq/kg, GTA = 29,4 meq/kg. On calcule la quantité théorique de fonctions phénol en extrémité de chaîne GTP d'après les quantités initiales introduites dans le réacteur. GTP = 437 meq/kg. Mn = 2.10⁶/(GTA + GTC + GTP) = 3510 g/mol .

Le polyamide PA 66 fonctionnalisé phénol par l'acide 4-hydroxyphenylacétique est semi-cristallin et a les caractéristiques thermiques suivantes : Tg=61,5°C, Tc= 231,9 °C, Tf= 259 °C, ΔHf = 81,5 J/g.

### Exemple 4 : préparation d'un polyamide PA 66 fonctionnalisé phénol par un monoacide-phénol

Dans un réacteur de polymérisation sont introduits 142,8 g de sel N (0,544 mol), 4,57 g d'acide 4-hydroxyphénylacétique à 98 % (0,03 mol), 5,28 g d'une aqueuse solution d'hexaméthylène diamine à 32,4% (0,015 mol) et 132 g d'eau déminéralisée et 2 g d'un agent antimousse. Le polyamide est fabriqué selon un procédé standard de polymérisation de type polyamide 66 avec 30 minutes de finition à pression atmosphérique. Le polymère obtenu est coulé sur un plateau.

Le polymère obtenu présente les caractéristiques suivantes :
GTC = 102,4 meq/kg, GTA = 31 meq/kg. On calcule la quantité théorique de fonctions phénol en extrémité de chaîne GTP d'après les quantités initiales introduites dans le réacteur. GTP = 223 meq/kg. Mn = 2.10⁶/(GTA + GTC + GTP) = 5610 g/mol .

Le polyamide PA 66 fonctionnalisé phénol par l'acide 4-hydroxyphenylacétique est semi-cristallin et a les caractéristiques thermiques suivantes : Tg=66,8°C, Tc= 234,7 °C, Tf= 262,9 °C, ΔHf = 81,9 J/g.

### Exemple 5 : préparation d'un polyamide PA 66 fonctionnalisé phénol par un monoacide-phénol

Dans un réacteur de polymérisation sont introduits 123,7 g de sel N (0,47 mol), 18,31 g d'acide 4-hydroxyphénylacétique à 98 % (0,118 mol), 23,22 g d'une aqueuse solution d'hexaméthylène diamine à 32,4% (0,064 mol) et 119,4 g d'eau déminéralisée et 2 g d'un agent antimousse. Le polyamide est fabriqué selon un procédé standard de polymérisation de type polyamide 66 avec 30 minutes de finition sous vide inférieur à 10 mbar. Le polymère obtenu est coulé sur un plateau.

Le polymère obtenu présente les caractéristiques suivantes :
GTC = 29,3 meq/kg, GTA = 45,2 meq/kg. On calcule la quantité théorique de fonctions phénol en extrémité de chaîne GTP d'après les quantités initiales introduites dans le réacteur. GTP = 911 meq/kg. Mn = 2.10⁶/(GTA + GTC + GTP) = 2030 g/mol .

Le polyamide PA 66 fonctionnalisé phénol par l'acide 4-hydroxyphenylacétique est semi-cristallin et a les caractéristiques thermiques suivantes : Tg=56,6°C, Tc= 223,5 °C, Tf= 249,8 °C, ΔHf = 75,8 J/g.

### Exemple 6 : préparation de formulations PA 66/Fibre de verre 70/30 et PA

Des formulations de polyamide/Fibres de verre Vetrotex FV983 dans un rapport 70/30 en poids sont réalisées dans une micro-extrudeuse bi-vis DSM à une vitesse de vis de 100 rpm.

Les polyamides utilisés sont ceux des exemples 2 à 5, ainsi que celui de l'exemple 1 comparatif 3. Les formulations chargées ont été réalisées avec des températures de chauffe de l'extrudeuse de 280°C. Les joncs sortis de l'extrudeuse sont coulés dans un bac de refroidissement à eau et ensuite granulés. Les granulés sont ensuite séchés dans une étude sous vide à 90°C pendant 14 heures.

### Exemple 7 : analyse thermomécanique dynamique en température

Les lots de formulations produits dans l'exemple 6 sont injectés à l'aide du module d'injection associé à la micro-extrudeuse sous la forme d'éprouvettes. La température du moule est régulée à 80°C. Ces éprouvettes sont ensuite découpées avant d'être utilisées pour comparer les propriétés thermomécaniques des formulations. On utilise un appareil TA Instruments RSA3 permettant de réaliser des flexions 3 points sur les éprouvettes : on impose à l'échantillon une sollicitation sinusoïdale (fréquence 1 Hz et amplitude 0,05%) et on récupère les valeurs des modules élastiques E' et de perte E". Les mesures sont effectuées en suivant une rampe de température de -40°C à 250°C à une vitesse de montée en température de 2°C/min.

On observe ainsi que les modules élastiques E' à 80°C des formulations à base de PA modifié selon l'invention sont supérieurs aux modules élastiques E' de la formulation selon l'art antérieur.

## Revendications

1. Composition comprenant au moins des charges de renfort et un polyamide modifié par un composé contenant au moins un groupement hydroxyle aromatique chimiquement lié à la chaîne du polyamide, le polyamide étant obtenu par polymérisation d'au moins les monomères suivants :
i) au moins un composé hydroxyaromatique A) choisi parmi : A2) un composé hydroxyaromatique monofonctionnel, dont la fonction peut réagir avec une fonction amine, et A4) une monoamine hydroxyaromatique, et
ii) au moins des monomères de polyamide choisis dans le groupe constitué par :
- un mélange d'un diacide B) aliphatique, cycloaliphatique, arylaliphatique, ou aromatique et d'une diamine C), et/ou
- un lactame ou un aminoacide D).

2. Composition selon la revendication 1, **caractérisée en ce que** le polyamide modifié est obtenu par polymérisation d'au moins les monomères suivants :
A) au moins un composé hydroxyaromatique choisi parmi :
- A2) un composé hydroxyaromatique monofonctionnel, dont la fonction peut réagir avec une fonction amine, et
- A4) une monoamine hydroxyaromatique,
B) un diacide aliphatique, cycloaliphatique, arylaliphatique, ou aromatique,
C) une diamine, de préférence aliphatique, et
D) éventuellement un lactame ou un aminoacide, de préférence aliphatique.

3. Composition selon la revendication 1 ou 2, **caractérisée en ce que** la fonction du composé A2) est une fonction acide.

4. Composition selon l'une des revendications précédentes, **caractérisée en ce que** lorsque le monomère A) est uniquement du type A2), au moins une fonction amine de la diamine C) est primaire.

5. Composition selon l'une quelconque des revendications précédentes, **caractérisée en ce que** lorsque le monomère A) est uniquement du type A4), au moins 3 atomes de carbone séparent l'atome d'azote de la fonction amine de l'atome d'oxygène de la fonction hydroxyle lorsque les deux fonctions amine et hydroxyle sont rattachées à un atome de carbone faisant partie d'un cycle aromatique, et au moins 5 atomes de carbone séparent l'atome d'azote de la fonction amine de l'atome d'oxygène de la fonction hydroxyle dans les autres cas.

6. Composition selon l'une des revendications précédentes, **caractérisée en ce que** les composé A2) et A4) sont de formule respective (III) et (IV) suivante :
(HO)ₓ-R"-COOH (III)
(HO)ₓ-R"-NH₂ (IV)
dans laquelle R" est un radical hydrocarboné aromatique ou arylaliphatique multivalent et x est compris entre 1 et 10.

7. Composition selon la revendication précédente, **caractérisé en ce que** R" comporte entre 6 et 18 atomes de carbone.

8. Composition selon la revendication 6 ou 7, **caractérisée en ce que** le composé A2) et A4) sont respectivement l'acide 4-hydroxyphénylacétique et la tyramine.

9. Composition selon l'une des revendications précédentes, **caractérisée en ce que** le composé B) est de formule (V) suivante :
HOOC-R'-COOH (V)
dans laquelle R' est un radical hydrocarboné divalent aliphatique, cycloaliphatique, arylaliphatique ou aromatique

10. Composition selon la revendication 9, **caractérisée en ce que** le radical R' comporte entre 2 et 18 atomes de carbone.

11. Composition selon la revendication 9 ou 10, **caractérisée en ce que** le composé B) est un diacide aliphatique.

12. Composition selon l'une des revendications précédentes, **caractérisée en ce que** le composé C) est de formule (VI) suivante :
H₂N-R-NH₂ (VI)
dans laquelle R est un radical hydrocarboné divalent aliphatique, cycloaliphatique, arylaliphatique ou aromatique

13. Composition selon la revendication 12, **caractérisée en ce que** le radical R comporte entre 2 et 18 atomes de carbone.

14. Composition selon l'une des revendications précédentes, **caractérisée en ce que** le lactame ou aminoacide D) comporte entre 2 et 18 atomes de carbone.

15. Composition selon l'une des revendications précédentes, **caractérisée en ce qu'**elle comprend des charges de renfort fibreuses choisies dans le groupe constitué par : les fibres de verre, les fibres de carbone, les fibres naturelles, les fibres d'aramides, et les nanotubes, notamment de carbone.

16. Composition selon l'une des revendications précédentes, **caractérisée en ce qu'**elle comprend des charges de renfort non fibreuses choisies dans le groupe constitué par : l'alumine, le noir de carbone, les argiles alumino-silicates, les montmorillonites, le phosphate de zirconium, le kaolin, le carbonate de calcium, les diatomées, le graphite, le mica, la silice, le dioxyde de titane, les zéolites, le talc, et la wollastonite.

17. Composition selon l'une des revendications précédentes, **caractérisée en ce qu'**elle comprend entre 1 % et 60 % en poids de charge de renfort, par rapport au poids total de la composition.

18. Composition selon l'une des revendications précédentes, **caractérisée en ce qu'**elle comprend des agents modifiants la résistance aux chocs.

19. Procédé de préparation d'une composition selon l'une des revendications précédentes dans lequel on procède d'abord à la polymérisation à l'état fondu des monomères A) en présence des monomères B) et C), et/ou D) décrits dans l'une des revendications précédentes ; et on mélange ensuite le polyamide modifié formé avec des charges de renfort.

20. Article obtenu par mise en forme à partir d'une composition selon l'une des revendications 1 à 18, de préférence par moulage, moulage par injection, injection/soufflage extrusion/soufflage, ou extrusion.

## Patentansprüche

1. Zusammensetzung, umfassend mindestens verstärkende Füllstoffe und ein Polyamid, das durch eine Verbindung mit mindestens einer aromatischen Hydroxylgruppe, die chemisch an die Polyamidkette gebunden ist, modifiziert ist, wobei das Polyamid durch Polymerisation mindestens der folgenden Monomeren erhalten wird:
i) mindestens einer hydroxyaromatischen Verbindung A), ausgewählt aus : A2) einer monofunktionellen hydroxyaromatischen Verbindung, deren Funktion mit einer Aminfunktion reagieren kann, und A4) einem hydroxyaromatischen Monoamin, und
ii) mindestens Polyamid-Monomeren aus der Gruppe bestehend aus :
- einer Mischung einer aliphatischen, cycloaliphatischen, arylaliphatischen oder aromatischen Disäure B) und eines Diamins C) und/oder
- einem Lactam oder einer Aminosäure D).

2. Zusammensetzung nach Anspruch 1, **dadurch gekennzeichnet, dass** das modifizierte Polyamin durch Polymerisation mindestens der folgenden Monomeren erhalten wird:
A) mindestens einer hydroxyaromatischen Verbindung, ausgewählt aus :
- A2) einer monofunktionellen hydroxyaromatischen Verbindung, deren Funktion mit einer Aminfunktion reagieren kann, und
- A4) einem hydroxyaromatischen Monoamin,
B) einer aliphatischen, cycloaliphatischen, arylaliphatischen oder aromatischen Disäure,
C) eines Diamins, vorzugsweise eines aliphatischen Diamins, und
D) gegebenenfalls eines Lactam oder einer Aminosäure, vorzugsweise eines aliphatischen Lactam oder einer aliphatischen Aminosäure.

3. Zusammensetzung nach Anspruch 1 oder 2, **dadurch gekennzeichnet, dass** es sich bei der Funktion der Verbindung A2) um eine Säurefunktion handelt.

4. Zusammensetzung nach einem der vorhergehenden Ansprüche, **dadurch gekennzeichnet, dass** dann, wenn das Monomer A) ausschließlich vom Typ A2) ist, mindestens eine Aminfunktion des Diamins C) primär ist.

5. Zusammensetzung nach einem der vorhergehenden Ansprüche, **dadurch gekennzeichnet, dass** dann, wenn das Monomer A) ausschließlich vom Typ A4) ist, mindestens 3 Kohlenstoffatome das Stickstoffatom der Aminfunktion von dem Sauerstoffatom der Hydroxylfunktion trennen, wenn die Aminfunktion und die Hydroxylfunktion an ein Kohlenstoffatom, das Teil eines aromatischen Rings ist, gebunden sind, und in den anderen Fällen mindestens 5 Kohlenstoffatome das Stickstoffatom der Aminfunktion von dem Sauerstoffatom der Hydroxylfunktion trennen.

6. Zusammensetzung nach einem der vorhergehenden Ansprüche, **dadurch gekennzeichnet, dass** die Verbindungen A2) und A4) die folgenden Formeln (III) bzw. (IV) aufweisen :
(HO)ₓ-R"-COOH (III)
(HO)ₓ-R"-NH₂ (IV)
worin R" für einen mehrwertigen aromatischen oder arylaliphatischen Kohlenwasserstoffrest steht und x zwischen 1 und 10 liegt.

7. Zusammensetzung nach dem vorhergehenden Anspruch, **dadurch gekennzeichnet, dass** R" zwischen 6 und 18 Kohlenstoffatome enthält.

8. Zusammensetzung nach Anspruch 6 oder 7, **dadurch gekennzeichnet, dass** es sich bei den Verbindungen A2) und A4) um 4-Hydroxyphenylessigsäure bzw. Tyramin handelt.

9. Zusammensetzung nach einem der vorhergehenden Ansprüche, **dadurch gekennzeichnet, dass** die Verbindung B) die folgende Formel (V) aufweist :
HOOC-R'-COOH (V)
worin R' für einen zweiwertigen aliphatischen, cycloaliphatischen, arylaliphatischen oder aromatischen Kohlenwasserstoffrest steht.

10. Zusammensetzung nach Anspruch 9, **dadurch gekennzeichnet, dass** der Rest R' zwischen 2 und 18 Kohlenstoffatome enthält.

11. Zusammensetzung nach Anspruch 9 oder 10, **dadurch gekennzeichnet, dass** es sich bei der Verbindung B) um eine aliphatische Disäure handelt.

12. Zusammensetzung nach einem der vorhergehenden Ansprüche, **dadurch gekennzeichnet, dass** die Verbindung C) die folgende Formel (VI) aufweist :
H₂N-R-NH₂ (VI)
worin R für einen zweiwertigen aliphatischen, cycloaliphatischen, arylaliphatischen oder aromatischen Kohlenwasserstoffrest steht.

13. Zusammensetzung nach Anspruch 12, **dadurch gekennzeichnet, dass** der Rest R zwischen 2 und 18 Kohlenstoffatome aufweist.

14. Zusammensetzung nach einem der vorhergehenden Ansprüche, **dadurch gekennzeichnet, dass** das Lactam oder die Aminosäure D) zwischen 2 und 18 Kohlenstoffatome aufweist.

15. Zusammensetzung nach einem der vorhergehenden Ansprüche, **dadurch gekennzeichnet, dass** sie faserförmige verstärkende Füllstoffe aus der Gruppe bestehend aus Glasfasern, Kohlefasern, Naturfasern, Aramidfasern und Nanoröhren, insbesondere aus Kohlenstoff, umfasst.

16. Zusammensetzung nach einem der vorhergehenden Ansprüche, **dadurch gekennzeichnet, dass** sie nicht faserförmige verstärkende Füllstoffe aus der Gruppe bestehend aus Aluminiumoxid, Ruß, Aluminosilikat-Tonen, Montmorilloniten, Zirconiumphosphat, Kaolin, Calciumcarbonat, Diatomeenerden, Graphit, Glimmer, Siliciumdioxid, Titandioxid, Zeolithen, Talkum und Wollastonit umfasst.

17. Zusammensetzung nach einem der vorhergehenden Ansprüche, **dadurch gekennzeichnet, dass** sie zwischen 1 und 60 Gew.-% verstärkenden Füllstoff, bezogen auf das Gesamtgewicht der Zusammensetzung, umfasst.

18. Zusammensetzung nach einem der vorhergehenden Ansprüche, **dadurch gekennzeichnet, dass** sie die Schlagzähigkeit modifizierende Mittel umfasst.

19. Verfahren zur Herstellung einer Zusammensetzung nach einem der vorhergehenden Ansprüche, bei dem man zunächst die Monomere A) in Gegenwart der Monomere B) und C) und/oder D) gemäß einem der vorhergehenden Ansprüche in der Schmelze polymerisiert und das gebildete modifizierte Polyamid danach mit verstärkenden Füllstoffen mischt.

20. Artikel, erhalten durch Formen aus einer Zusammensetzung nach einem der Ansprüche 1 bis 18, vorzugsweise durch Abformen, Spritzguss, Sputzblasen, Extrusionsblasen oder Extrusion.

## Claims

1. Composition comprising at least reinforcing fillers and a polyamide modified by a compound comprising at least one aromatic hydroxyl group chemically bonded to the chain of the polyamide, the polyamide being obtained by polymerization of at least the following monomers :
i) at least one hydroxyaromatic compound A) chosen from : A2) a monofunctional hydroxyaromatic compound, the functional group of which can react with an amine functional group, and A4) a hydroxyaromatic monoamine, and
ii) at least polyamide monomers chosen from the group consisting of :
- a mixture of an aliphatic, cycloaliphatic, arylaliphatic or aromatic diacid B) and of a diamine C), and/or
- a lactam or an amino acid D).

2. Composition according to Claim 1, **characterized in that** the modified polyamide is obtained by polymerization of at least the following monomers :
A) at least one hydroxyaromatic compound chosen from :
- A2) a monofunctional hydroxyaromatic compound, the functional group of which can react with an amine functional group, and
- A4) a hydroxyaromatic monoamine,
B) an aliphatic, cycloaliphatic, arylaliphatic or aromatic diacid,
C) a diamine, preferably an aliphatic diamine, and
D) optionally a lactam or an amino acid, preferably an aliphatic lactam or amino acid.

3. Composition according to Claim 1 or 2, **characterized in that** the functional group of the compound A2) is an acid functional group.

4. Composition according to one of the preceding claims, **characterized in that**, when the monomer A) is solely of the A2) type, at least one amine functional group of the diamine C) is primary.

5. Composition according to any one of the preceding claims, **characterized in that**, when the monomer A) is solely of the A4) type, at least 3 carbon atoms separate the nitrogen atom of the amine functional group from the oxygen atom of the hydroxyl functional group, when the two amine and hydroxyl functional groups are attached to a carbon atom forming part of an aromatic ring, and at least 5 carbon atoms separate the nitrogen atom of the amine functional group from the oxygen atom of the hydroxyl functional group in the other cases.

6. Composition according to one of the preceding claims, **characterized in that** the compounds A2) and A4) are of following respective formulae (III) and (IV) :
(HO)ₓ-R"-COOH (III)
(HO)ₓ-R"-NH₂ (IV)
in which R" is a polyvalent aromatic or arylaliphatic hydrocarbon radical and x is between 1 and 10.

7. Composition according to the preceding claim, **characterized in that** R" comprises between 6 and 18 carbon atoms.

8. Composition according to Claim 6 or 7, **characterized in that** the compounds A2) and A4) are respectively 4-hydroxyphenylacetic acid and tyramine.

9. Composition according to one of the preceding claims, **characterized in that** the compound B) is of following formula (V) :
HOOC-R'-COOH (V)
in which R' is a divalent aliphatic, cycloaliphatic, arylaliphatic or aromatic hydrocarbon radical.

10. Composition according to Claim 9, **characterized in that** the R' radical comprises between 2 and 18 carbon atoms.

11. Composition according to Claim 9 or 10, **characterized in that** the compound B) is an aliphatic diacid.

12. Composition according to one of the preceding claims, **characterized in that** the compound C) is of following formula (VI) :
H₂N-R-NH₂ (VI)
in which R is a divalent aliphatic, cycloaliphatic, arylaliphatic or aromatic hydrocarbon radical.

13. Composition according to Claim 12, **characterized in that** the R radical comprises between 2 and 18 carbon atoms.

14. Composition according to one of the preceding claims, **characterized in that** the lactam or amino acid D) comprises between 2 and 18 carbon atoms.

15. Composition according to one of the preceding claims, **characterized in that** it comprises fibrous reinforcing fillers chosen from the group consisting of glass fibers, carbon fibers, natural fibers, aramid fibers and nanotubes, in particular carbon nanotubes.

16. Composition according to one of the preceding claims, **characterized in that** it comprises nonfibrous reinforcing fillers chosen from the group consisting of alumina, carbon black, aluminosilicate clays, montmorillonites, zirconium phosphate, kaolin, calcium carbonate, diatomaceous earths, graphite, mica, silica, titanium dioxide, zeolites, talc and wollastonite.

17. Composition according to one of the preceding claims, **characterized in that** it comprises between 1 and 60 % by weight of reinforcing filler, with respect to the total weight of the composition.

18. Composition according to one of the preceding claims, **characterized in that** it comprises agents which modify the impact strength.

19. Process for the preparation of a composition according to one of the preceding claims, in which monomers A) are first melt polymerized in the presence of the monomers B) and C) and/or D) described in one of the preceding claims and the modified polyamide formed is subsequently blended with reinforcing fillers.

20. Article obtained by forming from a composition according to one of Claims 1 to 18, preferably by molding, injection molding, injection/blow molding, extrusion/blow molding or extrusion.
